(19) Europäisches Patentamt

European Patent Office

Office européen des brevets

(11) **EP 1 316 738 B1**

(12) **EUROPEAN PATENT SPECIFICATION**

(45) Date of publication and mention
of the grant of the patent:
**22.03.2006 Bulletin 2006/12**

(51) Int Cl.:
***F16C 39/06*** (2006.01)

(21) Application number: **02258201.9**

(22) Date of filing: **28.11.2002**

(54) **Magnetic bearing control device**

Magnetlagersteuerungsvorrichtung

Dispositif de commande de palier magnétique

(84) Designated Contracting States:
**DE FR**

(30) Priority: **03.12.2001 JP 2001369093**

(43) Date of publication of application:
**04.06.2003 Bulletin 2003/23**

(73) Proprietor: **BOC Edwards Japan Limited
Tokyo (JP)**

(72) Inventor: **Kawashima, Toshiaki,
c/o BOC Edwards
Narashino-shi,
Chiba (JP)**

(74) Representative: **Sturt, Clifford Mark et al
Miller Sturt Kenyon
9 John Street
London WC1N 2ES (GB)**

(56) References cited:
**EP-A- 0 836 022     US-A- 3 937 533
US-A- 5 300 841     US-A- 5 682 071
US-A- 6 005 316**

• **JING ZHANG ET AL: "IGBT power amplifiers for
active magnetic bearings of high speed milling
spindles" INDUSTRIAL ELECTRONICS,
CONTROL, AND INSTRUMENTATION, 1995.,
PROCEEDINGS OF THE 1995 IEEE IECON 21ST
INTERNATIONAL CONFERENCE ON ORLANDO,
FL, USA 6-10 NOV. 1995, NEW YORK, NY, USA,
IEEE, US, 6 November 1995 (1995-11-06), pages
596-601, XP010154742 ISBN: 0-7803-3026-9**

• **CARABELLI S ET AL: "A SWITCHING POWER
AMPLIFIER FOR ACTIVE MAGNETIC
SUSPENSIONS" EPE '97. 7TH. EUROPEAN
CONFERENCE ON POWER ELECTRONICS AND
APPLICATIONS. TRONDHEIM, SEPT. 8 - 10, 1997,
EPE. EUROPEAN CONFERENCE ON POWER
ELECTRONICS AND APPLICATIONS,
BRUSSELS, EPE ASSOCIATION, B, vol. 2 CONF.
7, 8 September 1997 (1997-09-08), pages
2291-2296, XP000792295 ISBN: 90-75815-02-6**

## Description

The present invention relates to a magnetic bearing control device and, in particular, to a magnetic bearing control device capable of suppressing a ripple current flowing through an electrolytic capacitor to a low level.

A magnetic bearing is used in a rotary apparatus such as a turbo-molecular pump for use in a semiconductor manufacturing process. A conventional magnetic bearing exciting circuit will be described on the basis of a construction example of the magnetic bearing of a turbo-molecular pump.

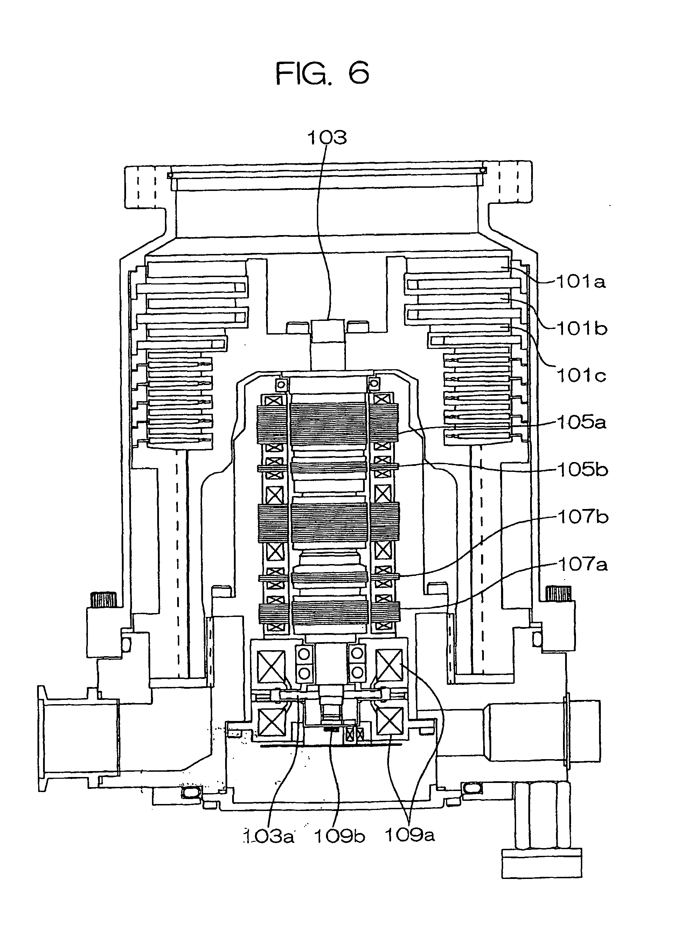

Fig. 6 is a sectional view showing a turbo-molecular pump as a construction example of a magnetic bearing.

In Fig. 6, the turbo-molecular pump is equipped with a rotating body 103 provided with a plurality of rotary vanes 101a, 101b, 101c, ... arranged in a number of stages and serving as turbine blades for discharging gas.

To rotatably support the rotating body 103, there are arranged an upper radial electromagnet 105a, a lower radial electromagnet 107a, and an axial electromagnet 109a to thereby form a magnetic bearing. Further, there are provided an upper radial sensor 105b, a lower radial sensor 107b, and an axial sensor 109b.

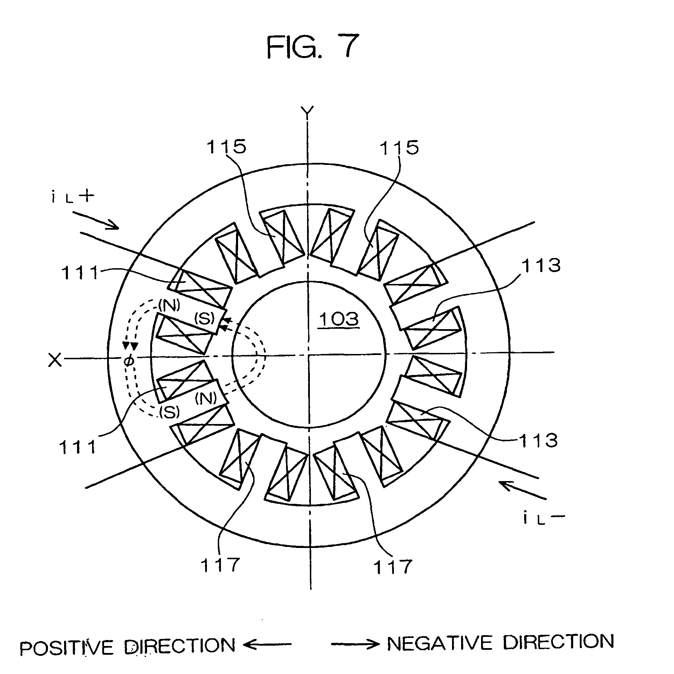

In each of the upper radial electromagnet 105a and the lower electromagnet 107a, four electromagnets are formed by electromagnet windings constructed as shown in the cross-sectional view of Fig. 7. These four electromagnets are opposed in twos to form a magnetic bearing of two axes: the X-axis and Y-axis.

More specifically, there is realized an opposite-polarity arrangement with electromagnet windings 111 wound around two adjacent core protrusions constituting one pair to thereby form one electromagnet. This electromagnet constitutes one pair together with the electromagnet formed by the electromagnet windings 113 wound around the core protrusions opposed thereto with the rotating body 103 therebetween, each attracting the rotating body 103 in the positive direction or the negative direction with respect to the X-axis.

Similarly, regarding the Y-axis direction orthogonal to the X-axis, one pair is formed as electromagnets opposed to each other with respect to the Y-axis direction using two electromagnet windings 115 and two electromagnet windings 117 opposed thereto.

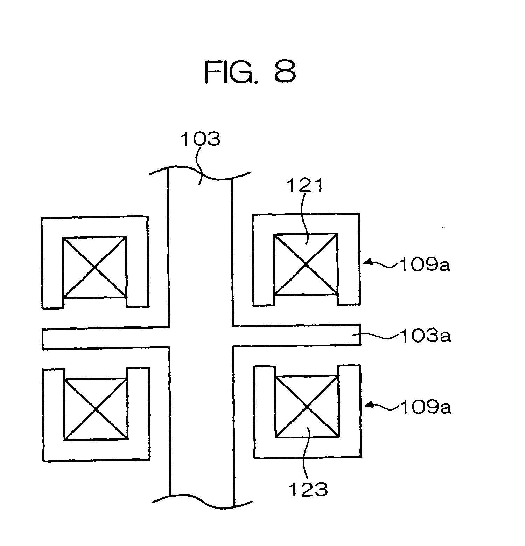

As shown in the longitudinal sectional view in Fig. 8, the axial electromagnets 109a are formed as one pair by two electromagnet windings 121 and 123 with the armature 103a of the rotating body 103 therebetween. The two electromagnets 109a respectively formed by the electromagnet windings 121 and 123 apply an attracting force to the armature 103a in the positive direction or the negative direction with respect to the rotation axis.

The upper radial sensor 105b and the lower radial sensor 107b consist of four sensing coils corresponding to the electromagnets 105a and 107a and arranged in the X- and Y-axis directions, and are adapted to detect a radial displacement of the rotating body 103. These sensors are constructed so as to transmit their respective detection signals to a magnetic bearing control device (not shown) .

On the basis of these sensor detection signals, the magnetic bearing control device individually adjusts through PID control or the like the attracting forces of the ten electromagnets constituting the upper radial electromagnet 105a, the lower radial electromagnet 107a, and the axial electromagnets 109a, whereby the rotating body 103 is supported in a magnetically levitated state.

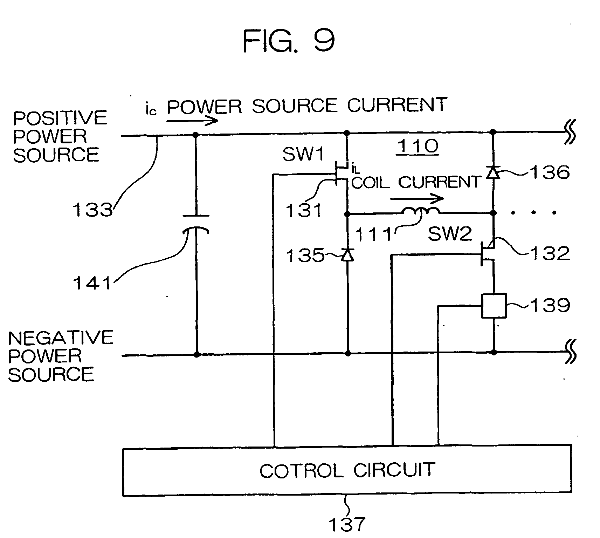

Next, a magnetic bearing exciting circuit for exciting the electromagnets of the magnetic bearing constructed as described above will be described. Fig. 9 shows an example of a magnetic bearing exciting circuit controlling an electric current flowing through electromagnet windings by a pulse width modulation system.

In Fig. 9, one end of the electromagnet winding 111 forming one electromagnet is connected to the positive electrode of a power source 133 through a transistor 131, and the other end thereof is connected to the negative electrode of the power source 133 through a transistor 132.

Then, the cathode of a current regeneration diode 135 is connected to one end of the electromagnet winding 111, and the anode thereof is connected to the negative electrode of the power source 133. Similarly, the cathode of a diode 136 is connected to the positive electrode of the power source 133, and the anode thereof is connected to the other end of the electromagnet winding 111. Between the positive electrode and the negative electrode of the power source 133, there is connected an electrolytic capacitor 141 for stabilization.

Further, an electric current detecting circuit 139 is provided on the source side of the transistor 132, and the electric current detected by this electric current detecting circuit 139 is input to a control circuit 137.

The exciting circuit 110 constructed as described above is provided in correspondence with the electromagnet winding 111, and similar exciting circuits 110 are also formed in correspondence with the other electromagnet windings 113, 115, 117, 121, and 123. Thus, in the case of a five-axis control type magnetic bearing, ten exciting circuits 110 are connected in parallel to the electrolytic capacitor 141.

In this construction, when both the transistors 131 and 132 are turned on, the electric current increases, and when both of them are turned off, the electric current decreases. When one of them is turned on, a flywheel current is maintained. By causing the flywheel current to flow, the hysteresis loss is reduced, making it possible to keep the power consumption at a low level.

Further, it is possible to reduce high frequency noise such as higher harmonic. Then, by measuring this flywheel current with the electric current detecting circuit 139, it is possible to detect electromagnet current $i_L$ flowing through the electromagnet winding 111 (See Japanese Patent No. 3176584).

The control circuit 137 compares a current command value with the detection value obtained by the electric current detecting circuit 139 to determine the pulse width within one switching period through pulse width modulation, and transmits signals to the gates of the transistors 131 and 132.

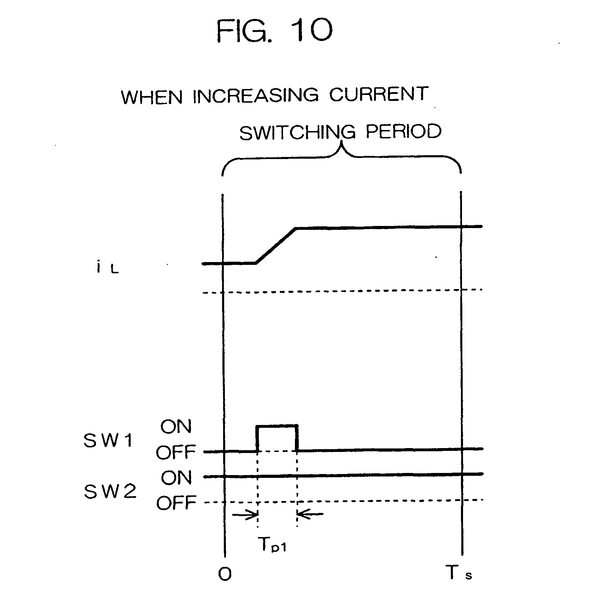

When the current command value is larger than the detection value, both the transistors 131 and 132 are turned on only once for a period of time corresponding to a pulse width time $T_{P1}$ within one switching period $T_s$ (for example, $T_s = 100 \mu s$), as shown in Fig. 10. At this time, the electromagnet current $i_L$ increases, and at the same time, a pulse-shaped positive electric current $i_{c1}$ flows through the electrolytic capacitor 141. That is, the electric current $i_{c1}$ flows out of the electrolytic capacitor 141.

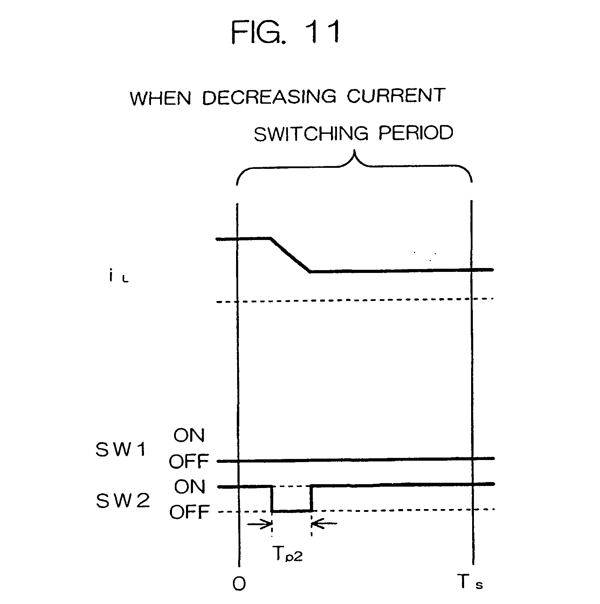

On the other hand, when the current command value is smaller than the detection value, both the transistors 131 and 132 are turned off only once for a period of time corresponding to a pulse width time $T_{P2}$ within one switching period $T_s$, as shown in Fig. 11. At this time, the electromagnet current $i_L$ decreases, and at the same time, a pulse-shaped negative electric current $i_{c2}$ flows through the electrolytic capacitor 141. That is, the electric current $i_{c2}$ flows into the electrolytic capacitor 141.

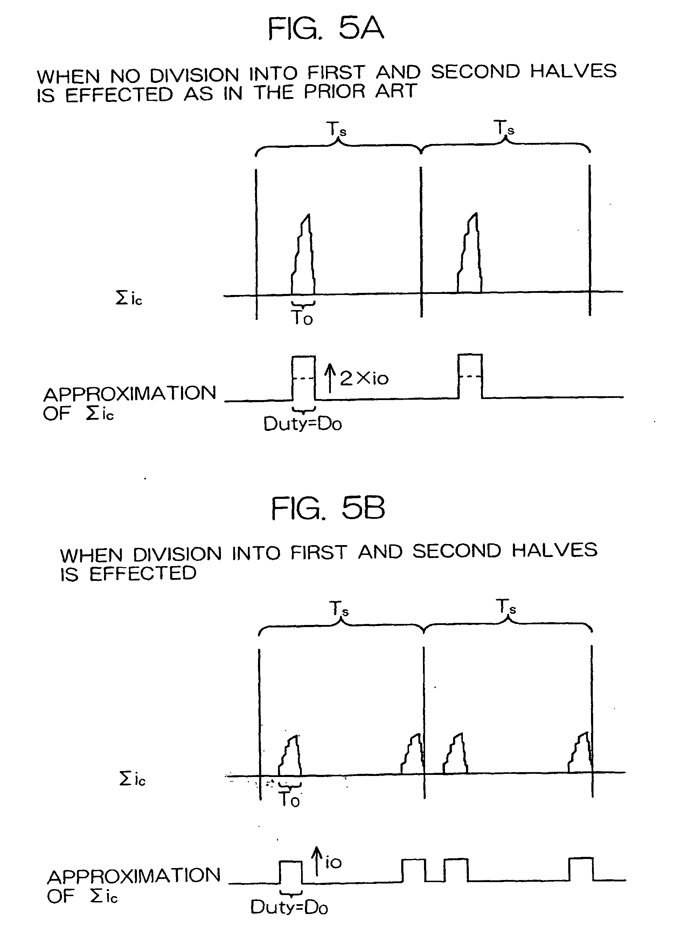

As shown in Fig. 5A, in the conventional magnetic bearing exciting circuit, there is, depending upon the levitation control of the rotating body 103, the danger of the current $i_{c1}$ (or the current $i_{c2}$) for ten axes being instantaneously superimposed and flowing as a ripple current. Thus, it is necessary to use a large electrolytic capacitor as the electrolytic capacitor 141, resulting in an increase in circuit size and high cost.

The present invention has been made in view of the above problem in the prior art. It is an object of the present invention to provide a magnetic bearing control device capable of suppressing a ripple current flowing through the electrolytic capacitor to a low level.

According to the present invention, there is provided a magnetic bearing control device comprising: a rotating body, magnetic bearing means for controlling the radial position and/or axial position of the rotating body by means of an electromagnet; exciting circuits including switching elements for effecting connection and disconnection between the electromagnet and a power source, arranged in a plurality of rows and connected to the power source in parallel; a capacitor arranged in the power source; and control means for pulse-controlling the switching elements, characterized in that the exciting circuits are divided into a plurality of groups so that the magnitude of the electric current flowing to the capacitor through the exciting circuits may be less than a predetermined value, and that a region in one switching period where pulse generation is effected differs from group to group or there is a partial overlapping of the regions between groups.

By dividing the exciting circuits into a plurality of groups and making the region where pulse generation is effected during one switching period different from group to group, it is possible to prevent an electric current from flowing simultaneously to the capacitor from all the exciting circuits. Due to the division into groups, the magnitude of the ripple current is smaller, so that the effective current also becomes smaller.

Note that as long as the current flowing to the capacitor through the exciting circuit is less than a predetermined value, there may be a partial overlapping of the regions where pulse generation is effected during one switching period between groups. Due to this arrangement, it is possible to achieve a reduction in capacitor size. The control unit can also be reduced in size, which leads to a reduction in cost.

Further, the magnetic bearing control device of the present invention is characterized in that the grouping of the exciting circuits is effected such that the combination of electric currents flowing to the capacitor is substantially uniform for each region.

With this structure, the effective current resulting from the ripple current is minimized.

Furthermore, the magnetic bearing control device of the present invention is characterized in that exciting circuits exciting electromagnets arranged opposite to each other so as to vary the radial position or the axial position in the same direction are in the same group.

Generally speaking, in control by a magnetic bearing, when the current flowing through one electromagnet increases, the current flowing through the other, opposite electromagnet is likely to decrease. Thus, when opposing electromagnets are in the same group, it is possible to reduce the ripple current flowing through the capacitor.

Embodiments of the present invention will now be described by way of further example only and with reference to the accompanying drawings, in which:-

Fig. 1 is a circuit diagram showing an embodiment of the present invention;
Fig. 2 is a time chart showing the control when the current command value is larger than the detection value;
Fig. 3 is a time chart showing the control when the current command value is smaller than the detection value;
Fig. 4A is a time chart showing how control is effected by opposing electromagnets (X-axis $i_L+$, X-axis $i_L-$) ;
Fig. 4B is a time chart showing how control is effected by opposing electromagnets (($i_c+$) = $i_c$ due to $i_L+$, ($i_c-$) = $i_c$ due to $i_L-$) ;

Fig. 4C is a time chart showing how control is effected by opposing electromagnets (($i_c$+) + ($i_c$-));

Fig. 5A is a diagram showing the magnitude of a ripple current flowing through an electrolytic capacitor (when there is no division into first and second halves as in the prior art);

Fig. 5B is a diagram showing the magnitude of a ripple current flowing through an electrolytic capacitor (when there is division into first and second halves);

Fig. 6 is a sectional view of a turbo-molecular pump;

Fig. 7 is a cross-sectional view of a radial electromagnet;

Fig. 8 is a longitudinal sectional view of an axial electromagnet;

Fig. 9 is a diagram showing an example of a magnetic bearing exciting circuit;

Fig. 10 is a time chart showing the control when the current command value is larger than the detection value; and

Fig. 11 is a time chart showing the control when the current command value is smaller than the detection value.

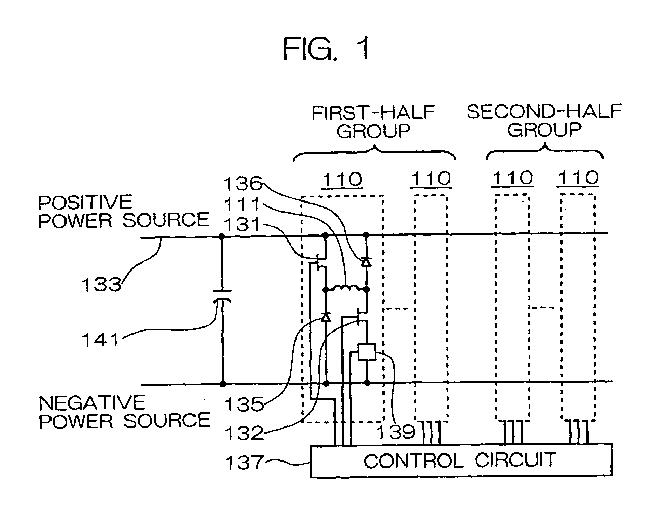

An embodiment of the present invention will now be described. Fig. 1 is a circuit diagram showing an embodiment of the present invention. The components which are the same as those of Fig. 9 are indicated by the same reference numerals, and a description of such components will be omitted.

In Fig. 1, the exciting circuits 110 for ten axes of a magnetic bearing are divided into two groups: a group in which the transistors 131 and 132 are controlled to generate pulses on the first half side of one switching period $T_s$ (ranging from 0 to $T_s$/2), and a group in which the transistors are controlled to generate pulses on the second half side thereof (ranging from $T_s$/2 to $T_s$).

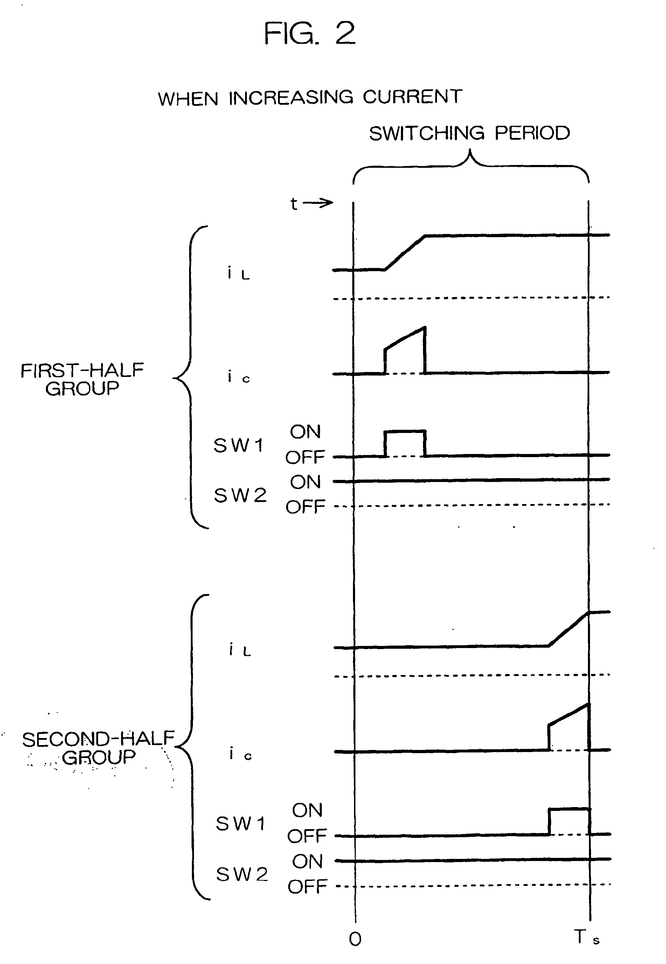

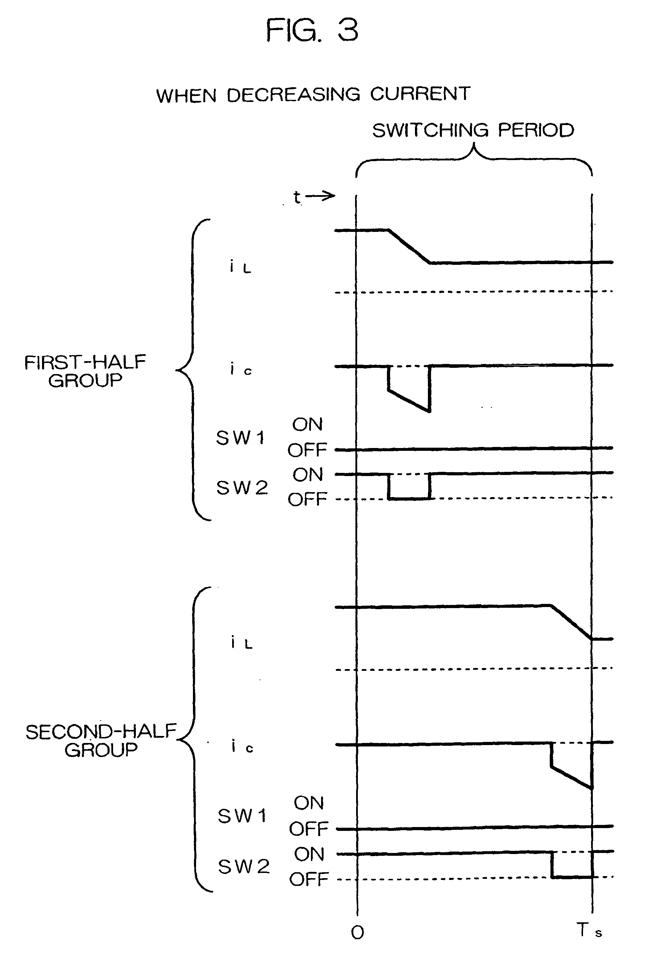

In this way, the exciting circuits 110 are divided into two groups. The time chart of Fig. 2 shows the control when the current command value is larger than the detection value, and the time chart of Fig. 3 shows the control when the current command value is smaller than the detection value.

Normally, the on/off duty of the transistors 131 and 132 is approximately 0 to 50%, so that through the division into the first-half group and the second-half group, it is possible to reduce the peak current flowing through the electrolytic capacitor 141.

In a specific example, the group in which the transistors 131 and 132 are controlled in the first half consists of the exciting circuits 110 corresponding to the electromagnet windings 111, 113, 115, and 117 of the lower radial electromagnet 107a.

On the other hand, the group in which control is effected in the second half consists of the exciting circuits 110 corresponding to the electromagnet windings 111, 113, 115, and 117 of the upper radial electromagnet 105a and the electromagnet windings 121 and 123 of the axial electromagnet 109a.

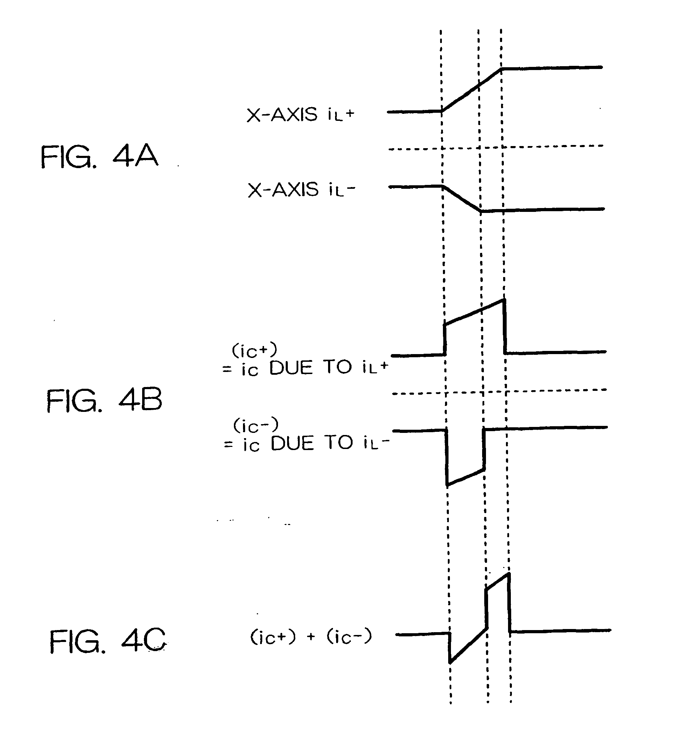

Further, in Fig . 7, when the rotating body 103 is to be controlled in the positive direction with respect to the X-axis, $i_L$+ is increased, and $i_L$- is decreased. Conversely, when it is to be controlled in the negative direction with respect to the X-axis, $i_L$+ is decreased, and $i_L$- is increased. Fig. 4A shows how this control is effected.

In this way, in the case in which the rotating body 103 is controlled by opposing electromagnets, when the current flowing through one electromagnet increases, the current flowing through the electromagnet on the opposite side tends to decrease. Thus, by putting these opposing electromagnets in the same group, it is possible to reduce the ripple current flowing through the electrolytic capacitor 141.

At this time, the current $i_c$ flowing from each exciting circuit 110 to the electrolytic capacitor 141 is as shown in Fig. 4B, and accordingly the combined current $i_c$ flowing to the electrolytic capacitor 141 is as shown in Fig. 4C. Thus, the effective value of the combined current $i_c$ can be made small.

Thus, it is desirable for the electromagnet windings 111 and 113 of the upper radial electromagnet 105a, the electromagnet windings 115 and 117 of the upper radial electromagnet 105a, the electromagnet windings 111 and 113 of the lower radial electromagnet 107a, the electromagnet windings 115 and 117 of the lower radial electromagnet 107a, and the electromagnet windings 121 and 123 of the axial electromagnet 109a to be grouped as pairs.

By thus grouping the windings, it is possible, as shown in Figs. 5A and 58, to suppress the ripple current flowing through the electrolytic capacitor 141 to approximately 1/2 as compared with that in the conventional construction.

Calculation of the effective current based on Figs. 5A and 58, using as a reference the magnitude of the ripple current flowing in the case in which division into two groups is effected as in the present invention, gives the following results: the effective current when grouping is effected as in the present invention is to be expressed by Equation 1, whereas the effective current in the case of the conventional arrangement is to be expressed by Equation 2. Here, the pulse width is $T_o$, and the duty $D = T_o / T_s$.

[Equation 1]

$$\text{Effective current } \sum Ic(rms) = \sqrt{io^2 \times D + io^2 \times D} = \sqrt{2}\sqrt{D} \times io$$

[Equation 2]

$$\text{Effective current} \sum \text{Ic(rms)} = \sqrt{(2 \times io)^2 \times D} = 2\sqrt{D} \times io$$

Thus, the effective current is reduced, so that it is possible for the electrolytic capacitor 141 used to be a small one. The control unit can also be reduced in size, which leads to a reduction in cost.

It is to be noted here that the grouping is not restricted to the above-mentioned combination. Any combination will do as long as the magnitude of the ripple current flowing through the electrolytic capacitor 141 is substantially uniform in both the first-half group and the second-half group. Thus, there is a certain degree of freedom regarding the combination.

While in the above embodiment of the present invention the pulse generation for the exciting circuits 110 is effected in two groups: the group in which the pulse generation is controlled in the first half of one switching period $T_s$, and the group in which it is controlled in the second half thereof, it is also possible to effect the pulse generation in three groups: first, middle, and last portions. In this case also, the exciting circuits 110 are grouped such that the magnitude of the ripple current flowing through the electrolytic capacitor 141 is substantially uniform in each of the three groups.

Further, as long as the magnitude of the ripple current flowing to the electrolytic capacitor 141 through each exciting circuit 110 is less than a predetermined value, it is possible to realize a partial overlapping, between different groups, of the regions where pulse generation is effected during one switching period.

As described above, in accordance with the present invention, the exciting circuits are divided into a plurality of groups, and the region where pulse generation is effected during one switching period differs from group to group, whereby there is no danger of an electric current flowing simultaneously to the capacitor from all the exciting circuits.

Due to the grouping, the magnitude of the ripple current is reduced, so that the effective current is also reduced. Thus, the capacitor size can be reduced. The control unit can also be reduced in size, which leads to a reduction in cost.

**Claims**

1. A magnetic bearing control device comprising:

   a rotating body (103);
   magnetic bearing means (105a, 105b, 107a, 107b, 109a, 109b) for controlling the radial position and/or axial position of the rotating body (103) by means of an electromagnet (105a, 107a, 109a) ;
   exciting circuits (110) including switching elements (131, 132) for effecting connection and disconnection between the electromagnet (105a, 107a, 109a) and a power source (133), arranged in a plurality of rows and connected to the power source (133) in parallel;
   a capacitor (141) arranged in the power source (133); and
   control means (137) for pulse-controlling the switching elements (131, 132),

   **characterized in that** the exciting circuits (110) are divided into a plurality of groups so that the magnitude of the electric current flowing to the capacitor (141) through the exciting circuits (110) may be less than a predetermined value, and that a region in one switching period where pulse generation is effected differs from group to group or there is a partial overlapping of the regions between groups.

2. A magnetic bearing control device according to Claim 1, **characterized in that** the grouping of the exciting circuits (110) is effected such that the combination of electric currents flowing to the capacitor (141) is substantially uniform for each region.

3. A magnetic bearing control device according to Claim 1 or 2, **characterized in that** exciting circuits (110) exciting electromagnets (105a, 107a, 109a) arranged opposite to each other so as to vary the radial position or the axial position in the same direction are in the same group.

**Patentansprüche**

1. Magnetlagersteuerungsvorrichtung, umfassend:

   einen rotierenden Körper (103);

Magnetlagermittel (105a, 105b, 107a, 107b, 109a, 109b) zur Steuerung der radialen Position und/oder axialen Position des rotierenden Körpers (103) mit Hilfe eines Elektromagneten (105a, 107a, 109a) ;
Erregerschaltungen (110), die Schaltelemente (131, 132) enthalten, um eine Verbindung und Trennung zwischen dem Elektromagneten (105a, 107a, 109a) und einer Stromquelle (133) zu bewirken, die in einer Mehrzahl von Reihen angeordnet und an die Stromquelle (133) parallel angeschlossen sind;
einen Kondensator (141), der in der Stromquelle (133) angeordnet ist; und Steuerungsmittel (137) zur Impulssteuerung der Schaltelemente (131, 132),

**dadurch gekennzeichnet, dass** die Erregerschaltungen (110) in eine Mehrzahl von Gruppen unterteilt sind, so dass die Größe des elektrischen Stroms, der durch die Erregerschaltungen (110) zu dem Kondensator (141) fließt, geringer als ein vorbestimmter Wert sein kann, und dass ein Bereich in einer Schaltperiode, in dem die Impulserzeugung ausgeführt wird, sich von Gruppe zu Gruppe unterscheidet oder eine Teilüberlappung der Bereiche zwischen Gruppen vorhanden ist.

2. Magnetlagersteuerungsvorrichtung nach Anspruch 1, **dadurch gekennzeichnet, dass** die Gruppierung der Erregerschaltungen (110) so ausgeführt ist, dass die Kombination elektrischer Ströme, die zu dem Kondensator (141) fließen, im Wesentlichen für jeden Bereich gleichförmig ist.

3. Magnetlagersteuerungsvorrichtung nach Anspruch 1 oder 2, **dadurch gekennzeichnet, dass** sich Erregerschaltungen (110), die Elektromagneten (105a, 107a, 109a) erregen, die einander gegenüber angeordnet sind, so dass die radiale Position oder die axiale Position in dieselbe Richtung verändert wird, in derselben Gruppe befinden.

**Revendications**

1. Dispositif de commande de palier magnétique comprenant :

   un corps rotatif (103) ;
   des moyens de palier magnétique (105a, 105b, 407a, 107b, 109a, 109b) pour contrôler la position radiale et/ou axiale du corps rotatif (103) à l'aide d'un électroaimant (105a, 107a, 109a) ;
   des circuits d'excitation (110) comprenant des éléments de commutation (131, 132) pour effectuer la connexion et la déconnexion entre l'électroaimant (105a, 107a, 109a) et une source d'alimentation (133), disposés en une pluralité de rangées et connectés en parallèle à la source d'alimentation (133) ;
   un condensateur (141) disposé dans la source d'alimentation (133) ; et un moyen de commande (137) pour la commande par impulsions des éléments de commutation (131, 132),

   **caractérisé en ce que** les circuits d'excitation (110) sont divisés en une pluralité de groupes, de sorte que l'intensité du courant électrique circulant vers le condensateur (141) à travers les circuits d'excitation (110) puisse être inférieure à une valeur prédéfinie, et qu'une zone dans laquelle on effectue une génération d'impulsion au cours d'une période de commutation diffère d'un groupe à l'autre, ou bien qu'il y a un chevauchement partiel des zones entre les groupes.

2. Dispositif de commande de palier magnétique selon la revendication 1, **caractérisé en ce que** le groupement des circuits d'excitation (110) s'effectue de manière à ce que la combinaison des courants électriques circulant vers le condensateur (141) est essentiellement uniforme pour chaque zone.

3. Dispositif de commande de palier magnétique selon les revendications 1 ou 2, **caractérisé en ce que** les circuits d'excitation (110) qui excitent les électroaimants (105a, 107a, 109a) disposés en opposition les uns aux autres de manière à faire varier la position radiale ou la position axiale dans la même direction, sont dans le même groupe.

# FIG. 1

FIRST-HALF
GROUP

SECOND-HALF
GROUP

110    110    110    110

POSITIVE
POWER SOURCE

136
111
131

133

141

NEGATIVE
POWER SOURCE    135

132

139

137    CONTROL CIRCUIT

# FIG. 2

WHEN INCREASING CURRENT

# FIG. 3

WHEN DECREASING CURRENT

SWITCHING PERIOD

FIRST-HALF GROUP

$i_L$

$i_C$

SW1 ON OFF

SW2 ON OFF

SECOND-HALF GROUP

$i_L$

$i_C$

SW1 ON OFF

SW2 ON OFF

O                                    T s

9

FIG. 4A

X-AXIS $i_L+$

X-AXIS $i_L-$

FIG. 4B

$(ic+)$
$= ic$ DUE TO $i_L+$

$(ic-)$
$= ic$ DUE TO $i_L-$

FIG. 4C

$(ic+) + (ic-)$

# FIG. 5A

WHEN NO DIVISION INTO FIRST AND SECOND HALVES
IS EFFECTED AS IN THE PRIOR ART

$T_s$          $T_s$

$\Sigma i_c$

$T_o$

APPROXIMATION
OF $\Sigma i_c$

$\uparrow 2 \times i_o$

Duty=$D_o$

# FIG. 5B

WHEN DIVISION INTO FIRST AND SECOND HALVES
IS EFFECTED

$T_s$          $T_s$

$\Sigma i_c$

$T_o$

APPROXIMATION
OF $\Sigma i_c$

$\uparrow i_o$

Duty=$D_o$

# FIG. 6

# FIG. 7

POSITIVE DIRECTION ←——    ——→ NEGATIVE DIRECTION

FIG. 8

# FIG. 9

POSITIVE POWER SOURCE

$i_c$ POWER SOURCE CURRENT

SW1

110

131

$i_L$ COIL CURRENT

136

135

111

SW2

132

133

141

139

NEGATIVE POWER SOURCE

COTROL CIRCUIT

137

# FIG. 10

## WHEN INCREASING CURRENT

# FIG. 11

WHEN DECREASING CURRENT